# EUROPÄISCHE PATENTSCHRIFT

(11) **EP 0 913 664 B1**
(45) Veröffentlichungstag und Bekanntmachung des Hinweises auf die Patenterteilung: **12.12.2001**
(21) Anmeldenummer: 98250365.8
(22) Anmeldetag: 19.10.1998
(51) Int. Cl.: F42D 3/00

(54) **Vorrichtung zum Einbau einer Sprengschnur in Horizontalfilterbrunnen**
Device for mounting a detonating cord in a horizontal filter well
Dispositif pour monter un cordeau détonant dans un puits à filtre horizontal

(30) Priorität: 29.10.1997 DE 19748955
(43) Veröffentlichungstag der Anmeldung: 06.05.1999
(73) Patentinhaber: Berliner Wasserbetriebe Anstalt d. öffentlichen Rechts, 10713 Berlin-Wilmersdorf (DE)
(72) Erfinder: Bauer, Klaus, 16761 Hennigsdorf (DE); Ewich, Lothar, 13589 Berlin (DE)

(56) Entgegenhaltungen:
- FR-A- 2 151 847
- GB-A- 1 367 011
- GB-A- 2 192 039

## Beschreibung

Die Erfindung betrifft eine Vorrichtung zum Einbau einer Sprengschnur in waagerechte Filterrohre, die bei der Regenerierung von Trinkwasserförderbrunnen, insbesondere von Horizontalfilterbrunnen, mittels Sprengschockverfahren zur Anwendung kommt.

Es ist bekannt, zur Regenerierung von Horizontalfilterbrunnen Chemikalien einzusetzen.
Das Einfüllen von Chemikalien, beispielsweise Salzsäure, erfolgt über eine zuvor in den Horizontalstrang eingebaute Säurekammer.
Nachteilig hiebei sind die schlechten Regenerierungsergebnisse und die große Umweltbelastung.

Auch ist die Reinigung über Hochdruck mit Wasser bei Horizontalfilterbrunnen bekannt.
Die mangelnde Effizienz der Ergebnisse unterbinden den kontinuierlichen Einsatz.

Desweiteren wird in der DE 36 20 979 ein Verfahren und eine Vorrichtung zur Reinigung von Horizontalbrunnen mittels Sprengschocken beschrieben.
Eine Sprengschnur wird in die horizontalen Filterrohre eingeführt, wobei die Schnur an Halteelementen, die an einem Stabelement befestigt sind, angebracht ist. Auch ist eine flexible Ausführung des Stabelementes beschrieben, die dann erforderlich wird, wenn an dem Horizontalfilterrohr ein gebogenes Rohr angeschlossen ist, das über den Ruhewasserstand des Horizontalfilterbrunnens herausragt.

Nachteilig dabei ist, daß diese Vorrichtungen die notwendige zentrische Anbringung der Sprengschnur nicht gewährleistet und die Möglichkeit besteht, daß die Sprengschnur durchhängt. Desweiteren führt das einseitige Anliegen der Sprengschnur an der Filterwand zur Zerstörung des Filters.

Aufgabe der Erfindung ist es, eine Vorrichtung zum Einbau einer Sprengschnur in Horizotalbrunnen zur Durchführung des Sprengschockverfahrens zu schaffen, die den zur Regenerierung des Brunnens notwendigen Sprengstoff über die gesamte Länge eines Filterstranges zentrisch positioniert und ein Durchhängen der Sprengschnur verhindert.

Erfindungsgemäß wird die Aufgabe dadurch gelöst, daß an einem starren Gestänge aus Rohr- oder Vollmaterial eine Sprengschnur parallel oder spiralförmig befestigt ist. An diesem Gestänge sind hintereinander und in bestimmten Abständen Zentrierkörbe angeordnet. Die Abstände sind so gewählt, daß ein Durchhängen der befestigten Sprengschnur verhindert wird. Durch das zentrische Anbringen der Sprengschnur wird gewährleistet, daß das Filterrohr des Horizontalbrunnens nicht zerstört wird.
Die Zentrierkörbe bestehen aus kreisförmigen, im Winkel von 90° miteinander verbundenen Rundstäben und ergeben ein Kugelprofil, dessen Durchmesser dem jeweiligen Rohrinnendurchmesser des Horizontalfilterstranges entspricht.
Die Rundstäbe sind vorzugsweise mit breiten Kufen zum Ausgleich von Unebenheiten im Horizontalfilterstrang versehen.
Das Gestänge entspricht der jeweiligen Filterlänge, indem mittels Verbindungen, die vorzugsweise als Schraubverbindungen ausgebildet und im Zentrierkorb angeordnet sind, mehrere Gestängeabschnitte zu einem Gestänge entsprechender Länge zusammengefügt sind.

Die Erfindung wird nachstehend an einem Ausführungsbeispiel näher erläutert.

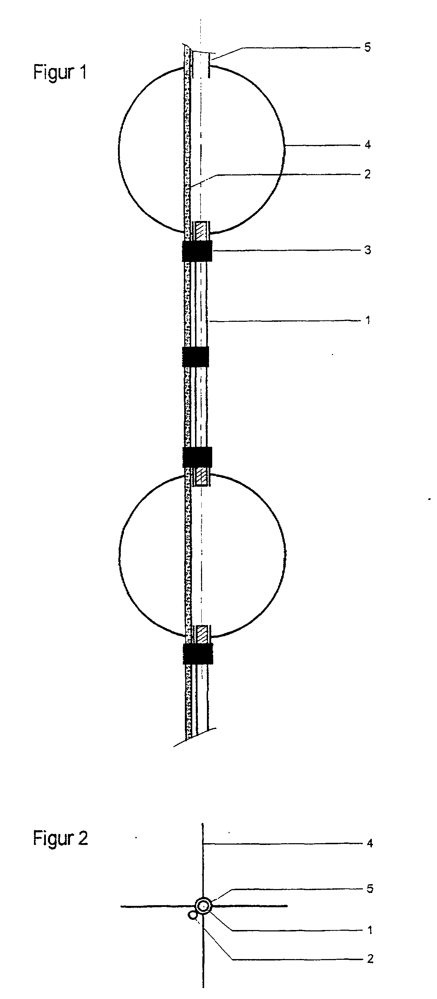

Die Figur 1 zeigt die Vorderansicht und die Figur 2 zeigt die Draufsicht der erfindungsgemäßen Vorrichtung.

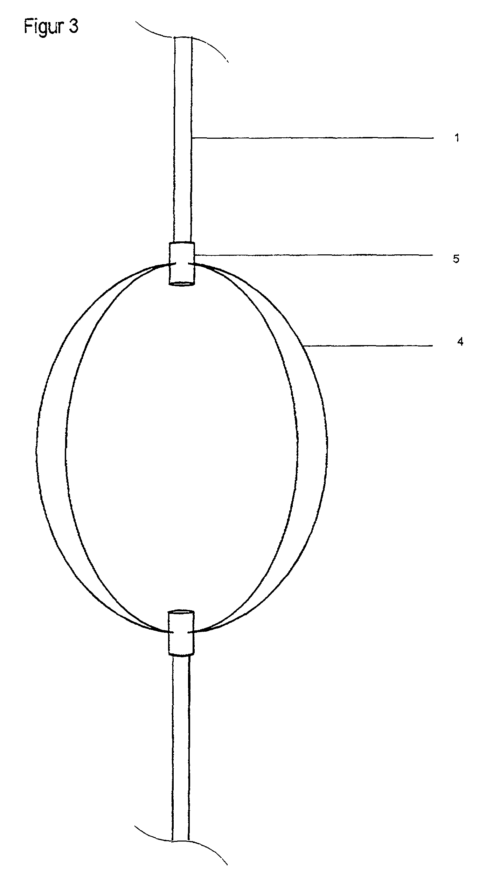

Die Figur 3 zeigt die perspektivische Ansicht eines Zentrierkorbes.

Als Beispiel wird ein Horizontalbrunnen, der eine Sammelbrunnentiefe von ca. 30 m ab Oberkante Gelände besitzt und mit 13 Filtersträngen, die auf zwei verschiedenen Ebenen sternförmig angeordnet sind, versehen ist, und eine Filterstranglänge zwischen 40 und 48 m mit einem Filterdurchmesser von 200 mm aufweist, beschrieben. An dem starren Gestänge 1 ist die Sprengschnur 2 parallel mit handelsüblichem Isolierband 3 im Abstand von 600 bis 800 mm befestigt. Desweiteren sind hintereinander im Abstand von 1250 mm Zentrierkörbe 4 angeordnet. Die Zentrierkörbe 4 bestehen aus Rundstahl und weisen einen Durchmesser von 190 mm auf.
Der Rundstahl ist so untereinander verschweißt, daß zwei im Winkel von 90° zueinander kreisförmige Teilstücke ein Kugelprofil ergeben.
Das Gestänge 1 entspricht der jeweiligen Filterlänge und wird durch Verbindungen 5, die als Gewindehülsen von einem Durchmesser von 6 mm ausgebildet und in den Zentrierkorb 4 eingeschweißt sind, gewährleistet.
Einzelne Gestängeabschnitte in einer Größe von 1250 mm bilden das gesamte Gestänge.

## Patentansprüche

1. Vorrichtung zum Einbau einer Sprengschnur in waagerechte Filterrohre, zur Regeneration von Trinkwasserförderbrunnen, insbesondere von Horizontalfilterbrunnen mittels Sprengschockverfahren.
**dadurch gekennzeichnet, daß**
an einem starren Gestänge (1), an dem die Sprengschnur (2) befestigt ist, hintereinander in bestimmten Abständen Zentrierkörbe (4), die aus kreisförmigen, im Winkel von 90° miteinander verbundenen Rundstäben mit vorzugsweise breiten Kufen bestehen, und ein Kugelprofil ergeben, dessen Durchmesser dem jeweiligen Rohrinnendurchmesser des Horizontalfilterstranges entspricht, angeordnet sind.

2. Vorrichtung nach dem Anspruch 1,
**dadurch gekennzeichnet, daß** das Gestänge (1) mittels Verbindungen (5) der jeweiligen Filterlänge eines Horizontalstranges angepaßt ist.

3. Vorrichtung nach den Ansprüchen 1 und 2,
**dadurch gekennzeichnet, daß**
das Gestänge (1) aus Rohr- oder Vollmaterial besteht.

4. Vorrichtung nach den Ansprüchen 1 bis 3,
**dadurch gekennzeichnet, daß**
die Sprengschnur (2) an dem starren Gestänge (1) parallel oder spiralförmig befestigt ist.

## Claims

1. Device for installing a detonating cord in horizontal filter pipes, for regeneration of drinking water wells, especially horizontal filter wells, by means of a detonation shock method, **characterised in that** centring baskets (4), which consist of circular round rods connected together at an angle of 90° and preferably having wide runners and which produce a spherical profile having a diameter corresponding with the respective pipe internal diameter of the horizontal filter line, are arranged one after the other at specific spacings at a rigid rod assembly (1) at which the detonating cord (2) is fastened.

2. Device according to claim 1, **characterised in that** the rod assembly (1) is adapted by means of connections (5) to the respective filter length of a horizontal line.

3. Device according to claims 1 and 2, **characterised in that** the rod assembly (1) consists of tubular or solid material.

4. Device according to claims 1 to 3, **characterised in that** the detonating cord (2) is fastened in parallel or spiral manner to the rigid rod assembly (1).

## Revendications

1. Dispositif pour monter un cordon détonant dans un puits à filtre horizontal pour la régénération de puits d'eaux potables, notamment des puits à filtre horizontal par le procédé des chocs explosifs,
**caractérisé en ce que**
sur une tige rigide (1) à laquelle est fixé le cordon détonant (2), on prévoit l'un derrière l'autre à des intervalles déterminés, des paniers de centrage (4) formés de tiges rondes, en cercle, faisant entre elles un angle de 90°, avec de préférence des patins larges pour obtenir un profil de sphère dont le diamètre correspond au diamètre respectif du tube du puits à filtre horizontal.

2. Dispositif selon la revendication 1,
**caractérisé en ce que**
la tige (1) est adaptée par des liaisons (5) aux longueurs de filtre respectives d'un puits horizontal.

3. Dispositif selon les revendications 1 et 2,
**caractérisé en ce que**
la tige (1) est une tige tubulaire ou une tige pleine.

4. Dispositif selon l'une quelconque des revendications 1 à 3,
**caractérisé en ce que**
le cordon détonant (2) est fixé à la tige rigide (1), en parallèle ou en spirale.
